# EUROPEAN PATENT SPECIFICATION

(11) **EP 1 826 453 B1**
(45) Date of publication and mention of the grant of the patent: **05.08.2009**
(21) Application number: 06019598.9
(22) Date of filing: 19.09.2006
(51) Int. Cl.: F16F 9/44, B62K 25/08

(54) **Damping force adjusting apparatus of front fork**
Einrichtung für Vorderradgabel zur Regelung der Dämpfkraft
Arrangement de fourche avant pour le réglage de la force d'amortissement

(30) Priority: 24.02.2006 JP 2006049250
(43) Date of publication of application: 29.08.2007
(73) Proprietor: SHOWA CORPORATION, Gyoda-shi, Saitama (JP)
(72) Inventor: Murakami, Yosuke, Fukuroi-shi Shizuoka (JP)
(74) Representative: Grünecker, Kinkeldey, Stockmair & Schwanhäusser Anwaltssozietät

(56) References cited:
- EP-A1- 1 544 094
- JP-Y2- 2 581 704

## Description

The present invention relates to a damping force adjusting apparatus of a front fork.

Japanese Utility Model Registration No. 2581704 (patent document 1) describes a hydraulic buffer. In the hydraulic buffer, a piston rod is movably inserted into a cylinder through a piston, the piston defines the cylinder into a rod-side oil chamber and a piston-side oil chamber. These two oil chambers are brought into communication with each other through an expansion-side port and a compression-side port formed in the piston. An expansion-side leaf valve and a compression-side leaf valve are provided in outlets of the expansion-side port and the compression-side port such that the leaf valves can open and close. The piston rod is provided with an expansion-side bypass and a compression-side bypass which bring the two oil chambers into communication with each other. The expansion-side bypass and the compression-side bypass are opened such that they are oriented toward back surfaces of the expansion-side leaf valve and the compression-side leaf valve rather than their pressure-receiving surfaces. Check valves are provided at outlet ends of the expansion-side bypass and the compression-side bypass such that the check valves can open and close. An adjuster rod which can move in a rotational direction and an axial direction is inserted into the piston rod. The adjuster rod is provided at its tip end with a first valve body which opens and closes the expansion-side bypass as the adjuster rod vertically moves, and the adjuster rod is provided with a second valve body which opens and closes the compression side bypass as the adjuster rod rotates. JP-A-2003-269515 discloses the preamble of claim 1.

The damping force adjusting apparatus of the patent document 1 has the following problems.
(1) An adjusting portion which moves the adjuster rod (corresponding to a push rod of the present invention is provided on a side of the hydraulic buffer closer to an upper end thereof and on one side of a lateral shaft which extends perpendicular to the adjuster rod. The adjuster rod can rotate through a gear train provided in the adjusting portion. Another adjusting portion which moves the adjuster rod in the axial direction is provided on the other side of the lateral shaft which extends perpendicular to the adjuster rod closer to an upper end of the hydraulic buffer. The adjuster rod can move in the axial direction through a tapered surface provided on the adjusting portion. It is absolutely necessary that each of the two adjusting portions includes the gear train and the tapered surface complex, the number of parts is high and operation failure is prone to be generated.
(2) The two adjusting portions are provided in the lateral direction perpendicular to the adjuster rod. This can be applied to a rear cushion but it can not be applied to a front fork which can be adjusted only from an upper end surface of a tube on the side of a vehicle body. Further, since the two adjusting portions have directional properties in the circumferential direction of the tube on the side of the vehicle body, an assembling position to a bracket on the side of the vehicle body in the circumferential direction is limited, and the assembling performance is poor.
(3) The second valve body is slidably fitted over an outer periphery of an oddly shaped connection of the adjuster rod. The second valve body is threadedly engaged with a thread formed on an inner periphery of the piston rod. A disposition space for a part which is fitted over the outer periphery of the adjuster rod is required. Applicability to a front fork having a thin piston rod is poor.

It is an object of the present invention to apply a damping force adjusting apparatus which is simple in structure, which has a small number of parts and in which operational failure is less prone to be generated, to a front fork which has a thin piston rod and which can be adjusted only from an upper end surface of a tube on the side of a vehicle body.

The present invention relates to a damping force adjusting apparatus of a front fork in which an inner tube on an axle side is slidably inserted into an outer tube on a vehicle body side, the inner tube is provided at its inner periphery with a division wall member, a working oil chamber is defined in a lower portion of the division wall member, and an oil reservoir chamber is defined in an upper portion of the division wall member, a hollow piston rod mounted on the outer tube side is inserted into the working oil chamber through the division wall member, the piston rod is provided at its tip end with a piston which slides in the working oil chamber, the working oil chamber of the inner tube is divided by a piston into a piston rod-side oil chamber and a piston-side oil chamber, the two oil chambers can be in communication with a compression-side flow path and an expansion-side flow path formed in the piston, outlets of the two flow paths are respectively provided with a compression-side damping valve and an expansion-side damping valve, a hollow portion of the piston rod is provided with a bypass passage which brings the piston rod-side oil chamber and the piston-side oil chamber into communication with each other, and the bypass passage is provided with the needle valve. The hollow portion of the piston rod is provided with a push rod having a noncircular cross section, the push rod can move in the rotational direction and the axial direction. A first adjusting portion which moves the push rod in the rotational direction and a second adjusting portion which moves the push rod in the axial direction are coaxially disposed on an extension of the push rod at an upper portion of the front fork. The needle valve which is slidably inserted into the noncircular cross section of the push rod is threadedly engaged with the hollow portion of the piston rod. A spring which collides against the push rod in the axial direction biases the compression-side damping valve in its closing direction.

The present invention will be more fully understood from the detailed description given below and from the accompanying drawings which should not be taken to be a limitation of the invention, but are for explanation and understanding only. The drawings:
FIG. 1 is a sectional view showing a front fork;
FIG. 2 is a sectional view showing a damping force adjusting apparatus of the front fork;
FIG. 3 is a sectional view showing a structure of an upper portion of FIG. 2;
FIG. 4 is a sectional view showing a structure of a lower portion of FIG. 2;
FIGS. 5 shows a cap assembly, wherein (A) is a sectional view and (B) is a plan view;
FIG. 6 is a sectional view showing a piston rod;
FIG. 7 shows a first adjusting portion, wherein (A) is a sectional view and (B) is an end surface view;
FIG. 8 is a plan view showing an engaging piece;
FIGS. 9 show a push rod, wherein (A) is an end surface view and (B) is a sectional view;
FIG. 10 is a front view showing a second adjusting portion;
FIG. 11 is a sectional view showing an inner base;
FIG. 12 is a side view showing a needle valve;
FIG. 13 is a plan view showing a pressing piece;
FIG. 14 is a sectional view showing a spring receiver; and
FIG. 15 is a sectional view showing a valve retainer.

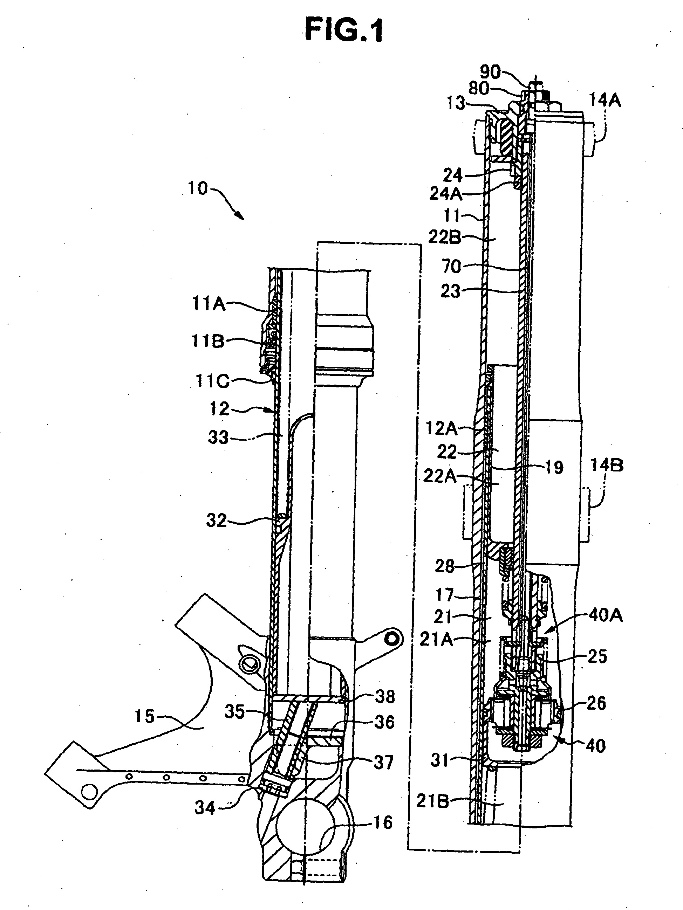

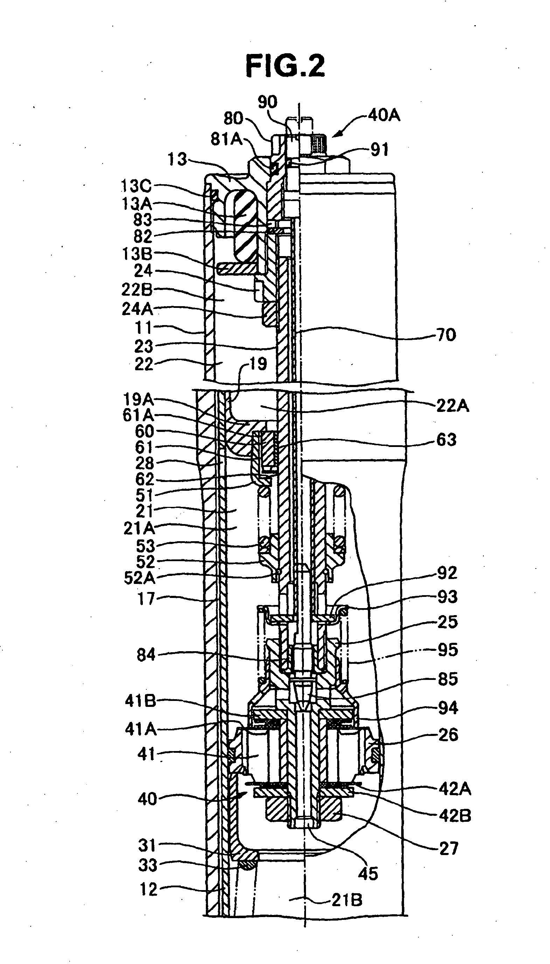

A front fork 10 is an inverted-type front fork in which an outer tube 11 is disposed on the side of a vehicle body and an inner tube 12 is disposed on the side of a wheel. As shown in FIGS. 1 and 2, the inner tube 12 is slidably inserted into the outer tube 11 through a guide bush 11A fixed to an inner periphery of a lower end opening of the outer tube 11 and a guide bush 12A fixed to an outer periphery of an upper end opening of the inner tube 12. Reference numeral 11B represents an oil seal, and reference numeral 11C represents a dust seal. A cap 13 is liquid-tightly threadedly engaged with the upper end opening of the outer tube 11, and the outer tube 11 is provided at its outer periphery with vehicle body-side mounting members 14A and 14B. An axle bracket 15 is liquid-tightly inserted into and engaged with the lower end opening of the inner tube 12, thereby forming a bottom of the inner tube 12, and the axle bracket 15 is provided with an axle mounting hole 16.

The front fork 10 defines an annular oil chamber 17 which is defined by an inner periphery of the outer tube 11, the outer periphery of the inner tube 12 and the two guide bushes 11A and 12A.

The front fork 10 is liquid-tightly provided with a division wall member 19 through an O-ring on an inner periphery of the upper end of the inner tube 12. The division wall member 19 defines an working oil chamber 21 in a lower portion lower than the rod guide portion 19A, and defines an oil reservoir chamber 22 in an upper portion. A lower region in the oil reservoir chamber 22 is an oil chamber 22A and an upper region in the oil reservoir chamber 22 is an air chamber 22B.

The front fork 10 slidably inserts a piston rod 23 mounted on the outer tube 11 into the rod guide portion 19A of the division wall member 19. More specifically, a hollow piston rod 23 is threadedly engaged with a mounting collar 24 which is threadedly engaged with a lower end of a center portion of the cap 13 and is fixed by the lock nut 24A.

The front fork 10 fixes a piston 26 which slides on an inner periphery of the inner tube 12 to a piston bolt 25 which is threadedly engaged with a tip end of the piston rod 23 inserted into the inner tube 12 from the rod guide portion 19A of the division wall member 19, and divides the working oil chamber 21 into a piston rod-side oil chamber 21A in which the piston rod 23 is accommodated and a piston-side oil chamber 21B in which the piston rod 23 is not accommodated. The piston 26 is fixed by a nut 27.

The front fork 10 always brings the annular oil chamber 17 into communication with the piston rod-side oil chamber 21A through an oil hole 28 formed in the inner tube 12.

The front fork 10 brings an upper spring receiver 31 into abutment against a lower end surface of the piston 26 facing the piston-side oil chamber 21B, disposes a lower spring receiver 32 on a bottom of the inner tube 12 formed by the axle bracket 15, and interposes a suspension spring 33 between an upper spring receiver 31 and a lower spring receiver 32. The front fork 10 absorbs an impact force received from a road surface when the vehicle runs by expansion and contraction vibration of a suspension spring 33. At that time, the front fork 10 threadedly engages an adjusting nut 35 with an adjusting bolt 34 provided such as to face outside at a position (on the side of the axle mounting hole 16) deviated from the axle mounting hole 16 of the axle bracket 15 constituting a bottom of the inner tube 12, prevents the adjusting nut 35 from rotating by a detent washer 36 provided in the inner tube 12, disposes a slider 37 on a lower portion of the detent washer 36 in the bottom of the inner tube, slides and guides an outer surface of the adjusting nut 35 by the slider 37, and supports a back surface of the lower spring receiver 32 through a washer 38 on a tip end of the adjusting nut 35. By turning and operating the adjusting bolt 34 from outside, the adjusting nut 35 which is prevented from rotating by the detent washer 36 is moved straightly, and the lower spring receiver 32 supported by a back surface of the adjusting nut 35 is vertically moved. Since the adjusting bolt 34 is provided such as to face outside at the position deviated from the axle mounting hole 16 of the inner tube 12, a spring load of the suspension spring 33 can be adjusted without detaching the front fork 10 from the axle.

The piston 26 of the front fork 10 includes a damping force generating apparatus 40 (FIG. 2).

The damping force generating apparatus 40 includes a compression-side flow path 41 and an expansion-side flow path 42 (now shown). The compression-side flow path 41 is opened and closed by a compression-side disc valve 41A (compression-side damping valve) which is backed up by the valve stopper 41B. The expansion-side flow path 42 is opened and closed by an expansion-side disc valve 42A (expansion-side damping valve) which is backed up by the valve stopper 42B. The valve stopper 41B, the valve 41A, the piston 26, the valve 42A and the valve stopper 42B constitute a valve assembly inserted into the piston bolt 25, and are sandwiched and fixed by the nut 27 threadedly engaged with the piston bolt 25.

The damping force generating apparatus 40 is provided at a center of the cap 13 with a damping force adjusting apparatus 40A, inserts a needle valve 85 of the damping force adjusting apparatus 40A into a hollow of the piston rod 23, and adjusts the opening degree of a bypass passage 45 provided in the piston rod 23 by a vertical movement of the needle valve 85. The bypass passage 45 bypasses the piston 26, and brings the piston rod-side oil chamber 21A and the piston-side oil chamber 21B into communication with each other.

The damping force generating apparatus 40 generates a compression-side damping force by a passage resistance of the bypass passage 45 whose opening degree is adjusted by the needle valve 85 during a compression-side stroke, the compression-side disc valve 41A is bent and deformed in intermediate speed and high speed regions, and compression-side damping force is generated. During expansion-side stroke, in a low speed region, expansion-side damping force is generated by a passage resistance of the bypass passage 45 whose opening degree is adjusted by the needle valve 85, the expansion-side disc valve 42A is bent and deformed in the intermediate speed and high speed regions, and the expansion-side damping force is generated. The compression-side damping force and the expansion-side damping force damp the expansion and contraction vibration of the suspension spring 33.

The front fork 10 fixes, to a lower end surface of the cap 13, a stopper rubber 13A and a stopper plate 13B against which an upper end of the division wall member 19 provided on the inner tube 12. The stopper rubber 13A restricts the most compressing stroke.

A spring sheet 51 is swaged and fixed to a lower end surface of the division wall member 19 on the side of an upper end of the inner tube 12 facing the piston rod-side oil chamber 21A. A spring sheet 52 is retained to a stopper ring 52A provided on the piston rod 23. The front fork 10 interposes a rebound spring 53 between the spring sheet 51 and the spring sheet 52. When the front fork 10 is most expanded, the division wall member 19 presses the rebound spring 53 between the division wall member 19 and the spring sheet 52, thereby restricting the most expanding stroke.

In the front fork 10, a cross-sectional area S1 of the annular oil chamber 17 comprising an annular gap between the outer tube 11 and the inner tube 12 is set greater than a cross-sectional area (area surrounded by outer diameter) S2 of the piston rod 23 (S1>S2 including S1≥2).

The rod guide portion 19A of the division wall member 19 is provided with a check valve 60. The check valve 60 permits oil to flow into the piston rod-side oil chamber 21A from the oil reservoir chamber 22 during the compression-side stroke, and the check valve 60 prevents oil from flowing into the oil reservoir chamber 22 from the piston rod-side oil chamber 21A during the expansion-side stroke. A valve chamber 61 is provided in an inner periphery of the rod guide portion 19A of the division wall member 19. The check valve 60 is accommodated between a step 61A on an upper end side of the valve chamber 61 and a back up spring 62 on the spring sheet 51 provided on the lower end side of the valve chamber 61. The check valve 60 is shorter than a gap between the step 61A and the spring sheet 51, and a lateral groove is formed in the lower end surface. The check valve 60 can slide on an inner periphery of the valve chamber 61 provided on the rod guide portion 19A of the division wall member 19 and can be displaced vertically. A flow path is formed between the outer periphery of the check valve 60 and the inner periphery of the valve chamber 61 provided in the rod guide portion 19A of the division wall member 19, and oil flows from the oil reservoir chamber 22 to the piston rod-side oil chamber 21A through this flow path. A bush 63 is press-fitted into an inner periphery of the check valve 60. The bush 63 slidably supports the piston rod 23. During the compression-side stroke, the check valve 60 moves together with the piston rod 23 which enters the inner tube 12 and moves downward, and collides against the spring sheet 51, forms a gap between the check valve 60 and the step 61A, so that oil in the oil reservoir chamber 22 can pass through a gap between the step 61A through an outer periphery of the lateral groove from the lateral groove, and the oil can flow into the piston rod-side oil chamber 21A. In the expansion-side stroke, the check valve 60 moves together with the piston rod 23 which retreats from the inner tube 12 and moves upward, collides against the step 61A, closes the gap between the step 61A, and the check valve 60 prevents oil in the piston rod-side oil chamber 21A from being discharged into the oil reservoir chamber 22 through a path opposite from that of the compression-side stroke.

The rod guide portion 19A of the division wall member 19 does not have an oil seal around the piston rod 23. Thus, the bush 63 which is press-fitted into the inner periphery of the check valve 60 constitutes a fine flow path (orifice) 64 which brings the piston rod-side oil chamber 21A and the oil reservoir chamber 22 into communication with each other by a fine gap (or fine gap formed between the check valve 60 and the step 61A) formed around the piston rod 23. The fine flow path 64 may be formed in the rod guide portion 19A of the division wall member 19. The piston rod-side oil chamber 21A and the oil reservoir chamber 22 are in communication with each other through the fine flow path 64.

The front fork 10 is operated in the following manner.

### (Compression-side stroke)

During the compression-side stroke, working oil of an entering capacity amount of the piston rod 23 which enters the inner tube 12 is sent to the annular oil chamber 17 from the oil chamber 21A in the inner periphery of the inner tube 12 through the oil hole 28 of the inner tube 12. At that time, since a capacity-increase amount ΔS1 of the annular oil chamber 17 is greater than a capacity-increase amount ΔS2 of the piston rod 23, shortfall of (ΔS1-ΔS2) of a necessary supply amount of oil to the annular oil chamber 17 is supplied from the oil reservoir chamber 22 through the check valve 60.

During this compression-side stroke, as described above, a compression-side damping force is generated in the low speed region by a passage resistance of the bypass passage 45 whose opening degree is adjusted by the needle valve 85, and in the intermediate speed and high speed regions, the compression-side disc valve 41A is bent and deformed and a compression-side damping force is generated.

### (Expansion-side stroke)

In the expansion-side stroke, working oil of retreating capacity amount of the piston rod 23 which retreats from the inner tube 12 is sent into the oil chamber 21A in the inner periphery of the inner tube 12 from the annular oil chamber 17 through the oil hole 28 of the inner tube 12. At that time, since a capacity decrease amount ΔS1 (discharge amount) of the annular oil chamber 17 is greater than a capacity decrease amount ΔS2 of the piston rod 23, a surplus amount of (ΔS1-ΔS2) of the discharge amount of oil from the annular oil chamber 17 is discharged into the oil reservoir chamber 22 from the fine flow path 64.

During this expansion-side stroke, as described above, an expansion-side damping force is generated in the low speed region by a passage resistance of the bypass passage 45 whose opening degree is adjusted by the needle valve 85, and in the intermediate speed and high speed regions, the expansion-side disc valve 42A is bent and deformed and an expansion-side damping force is generated. The expansion-side damping force is also generated due to the passage resistance of the fine flow path 64.

The damping force adjusting apparatus 40A will be explained.

As shown in FIGS. 2 to 4, in the damping force adjusting apparatus 40A, one push rod 70 is provided on a hollow portion of the piston rod 23. The push rod 70 has a noncircular cross section (D-shaped cross section in this embodiment). The push rod 70 can move in the rotational direction and the axial direction. A first adjusting portion 80 which moves the push rod 70 in the rotational direction and a second adjusting portion 90 which moves the push rod 70 in the axial direction are coaxially disposed on an extension of the push rod 70 at an upper portion of the front fork 10. The needle valve 85 is slidably inserted into the noncircular cross section of the push rod 70. The damping force adjusting apparatus 40A threadedly engages the needle valve 85 with the hollow portion of the piston rod 23, the needle valve 85 is threadedly moved by the rotation of the first adjusting portion 80, the opening degree of the bypass passage 45 is adjusted by the needle valve 85, and the damping force can be adjusted by the passage resistance of the bypass passage 45. The damping force adjusting apparatus 40A biases the compression-side disc valve 41A in its closing direction by a spring 95 which collides against the push rod 70 in the axial direction, the compression-side disc valve 41A is bent and deformed and the compression-side damping force can be adjusted. Structures of the first adjusting portion 80 and the second adjusting portion 90, a damping force adjusting structure using the needle valve 85 and a damping force adjusting structure using the spring 95 will be explained.

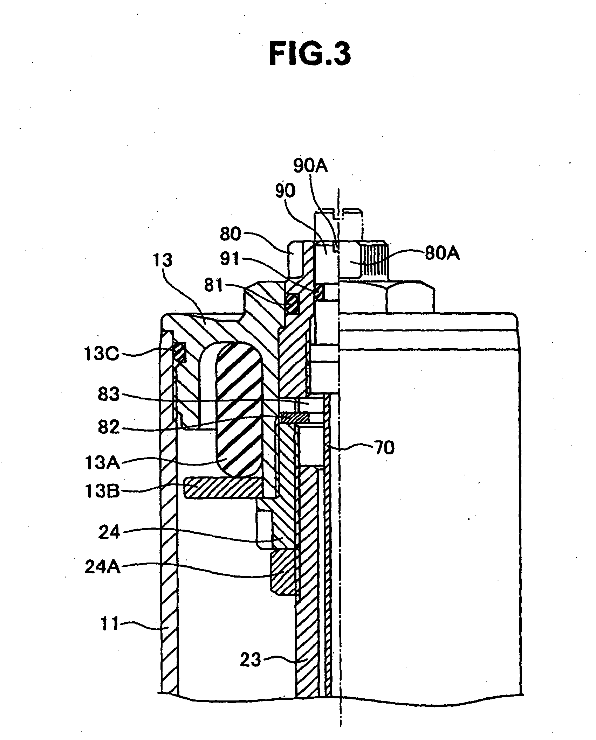

### (Structure of first adjusting portion 80 and second adjusting portion 90) (FIG. 3)

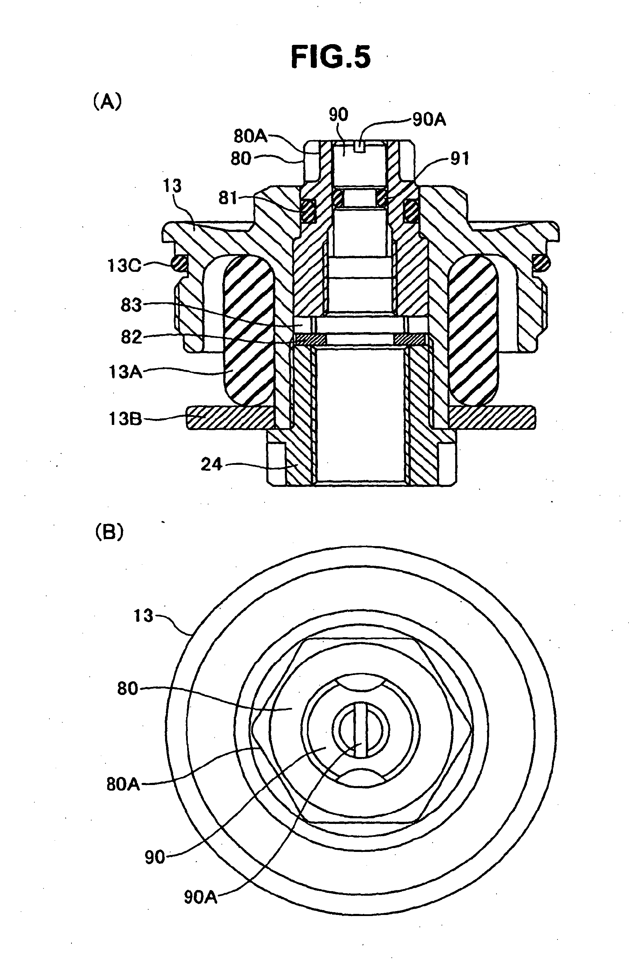

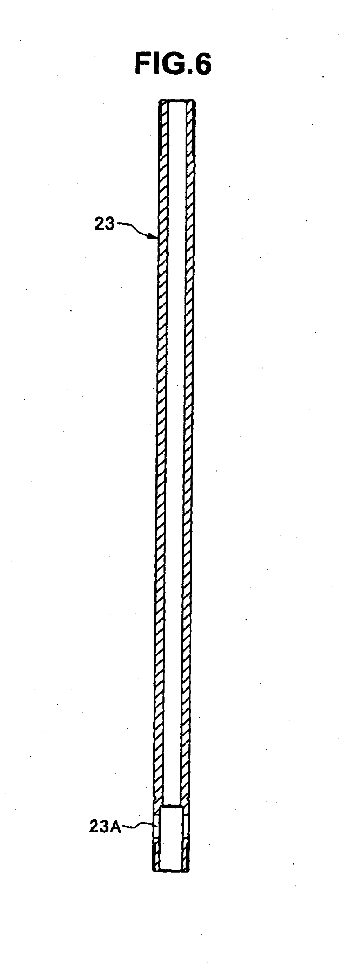

A cap 13 constitutes a cap assembly shown in FIGS. 5. The cap 13 is liquid-tightly threadedly engaged with an upper end opening of the outer tube 11 through an O-ring 13C. The mounting collar 24 is threadedly engaged with a lower end opening of the cap 13, and an upper end of the piston rod 23 shown in FIG. 6 is threadedly engaged with the mounting collar 24, and is fixed by the lock nut 24A.

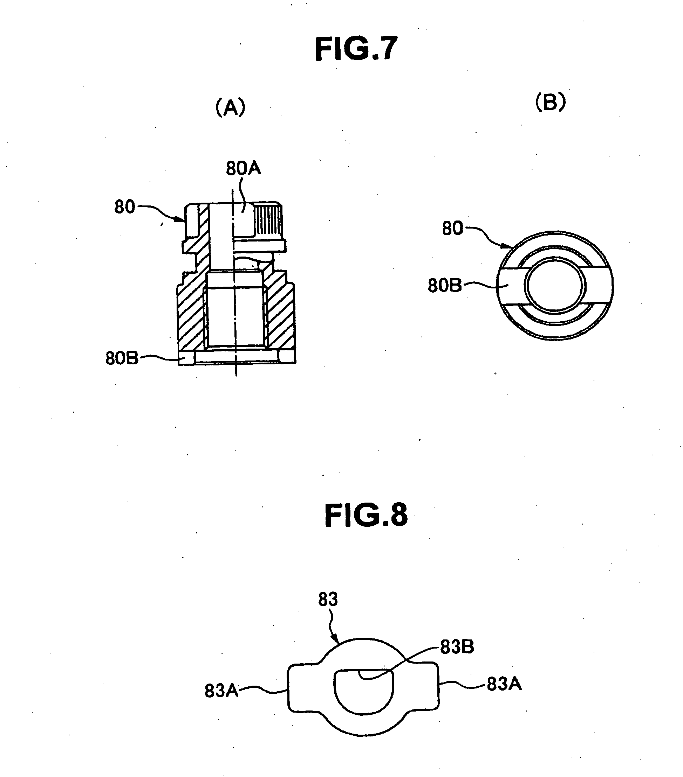

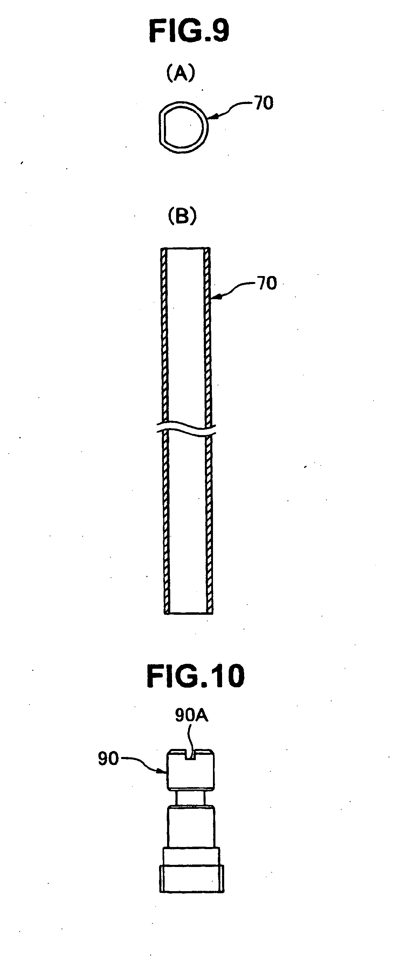

The first adjusting portion 80 is liquid-tightly inserted from a lower end opening of a center hole of the cap 13 through an O-ring 81. The first adjusting portion 80 is engaged with an intermediate step of the cap 13 in the axial direction and is prevented from being pulled out upward, the first adjusting portion 80 axially collides against the flat washer 82 placed on an upper end surface of the mounting collar 24 which is threadedly engaged with a lower end opening of the cap 13, the first adjusting portion 80 is prevented from being pulled out downward and as a result, the first adjusting portion 80 is rotatably provided on the cap 13 using the operating surface 80A on the upper end outer periphery. The lower end surface of the first adjusting portion 80 which collides against the flat washer 82 includes the lateral groove 80B as shown in FIGS. 7. Both side projections 83A of an engaging piece 83 shown in FIG. 8 are engaged with the lateral groove 80B in the rotational direction almost without play. A pressing piece of the push rod 70 having a noncircular cross section (D-shaped cross section) as shown in FIGS. 9 penetrates a noncircular hole (D-shaped hole) 83B formed in the center of the engaging piece 83, the outer periphery is engaged with the engaging piece 83 almost without play in the rotational direction, and the outer periphery can slide in the axial direction. With this, the first adjusting portion 80 can move the push rod 70 in the rotational direction.

The second adjusting portion 90 is liquid-tightly inserted from the lower end opening of the center hole of the first adjusting portion 80 through an O-ring 91. The second adjusting portion 90 engages with the intermediate step of the first adjusting portion 80 in the axial direction and is prevented from being pulled out upward. The lower end surface of the second adjusting portion 90 collides against an upper end surface of the push rod 70 without gap in the axial direction. The push rod 70 penetrates a noncircular hole 83B of the engaging piece 83 which is engaged with a side of the first adjusting portion 80. The push rod 70 is biased upward by a spring force of the later-described spring 95, and an upper end surface of the push rod 70 always collides against the lower end surface of the second adjusting portion 90. The second adjusting portion 90 is threadedly moved with respect to the first adjusting portion 80 using an operating groove 90A in an upper end surface of the second adjusting portion 90 shown in FIG. 10 and the push rod 70 can be moved in the axial direction.

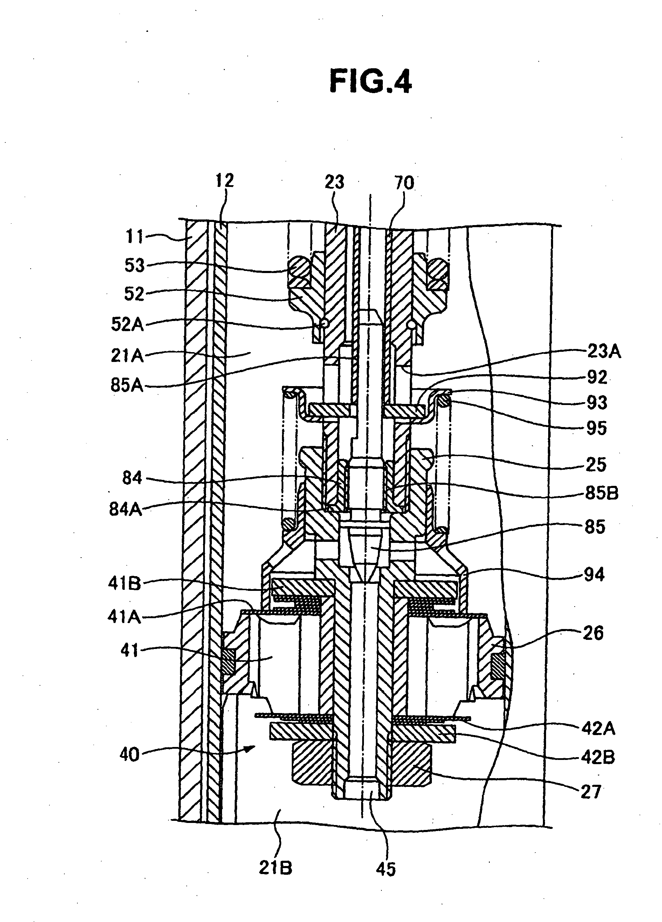

### (Damping force adjusting structure using needle valve 85) (FIG. 4)

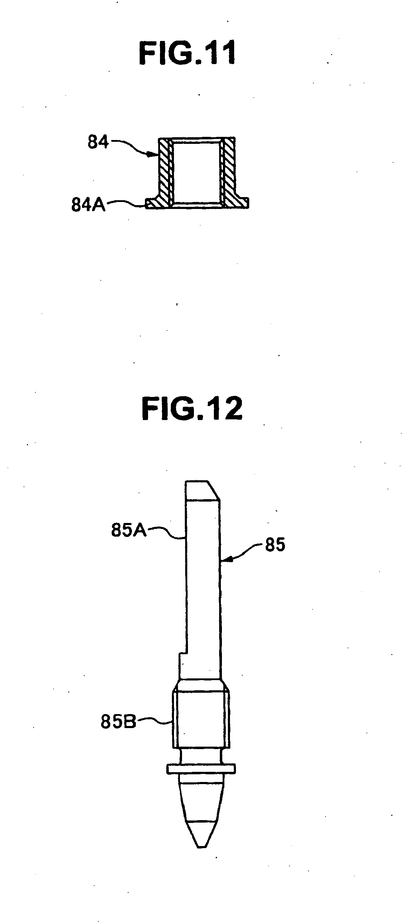

The inner base 84 shown in FIG. 11 is inserted into the lower end of the hollow portion of the piston rod 23, and the lower end surface of the piston rod 23 and the inner diameter step of the piston bolt 25 sandwich and fix the lower end flange 84A of the inner base 84. The inner base 84 may be press-fitted into the hollow portion of the piston rod 23. The screw portion 85B of the intermediate portion of the needle valve 85 shown in FIG. 12 is threadedly engaged with the inner periphery of the inner base 84 fixed to the piston rod 23 in this manner. A noncircular cross sectional portion 85A having a noncircular cross section (D-shaped cross section in this embodiment) of the upper end of the needle valve 85 is inserted into the noncircular cross section of the lower end of the push rod 70 inserted into the hollow portion of the piston rod 23 almost without play such that the noncircular cross sectional portion 85A can slide in the axial direction and is engaged in the rotational direction.

If the first adjusting portion 80 moves the push rod 70 in the rotational direction, the needle valve 85 which is in engagement with the push rod 70 in the rotational direction threadedly moves with respect to the inner base 84 on the side of the piston rod 23, the needle valve 85 moves forward and backward with respect to the valve sheet of the upper end of the vertical hole of the bypass passage 45 formed in the piston bolt 25, the needle valve 85 adjusts the opening degree of the bypass passage 45, and the compression-side damping force and the expansion-side damping force caused by the passage resistance of the bypass passage 45 can be adjusted.

When the first adjusting portion 80 threadedly moves the needle valve 85 through the push rod 70, the needle valve 85 idles with respect to the center hole 92B of the pressing piece 92 for the later-described spring 95, and this does not affect the spring 95.

### (Damping force adjusting structure using spring 95) (FIG. 4)

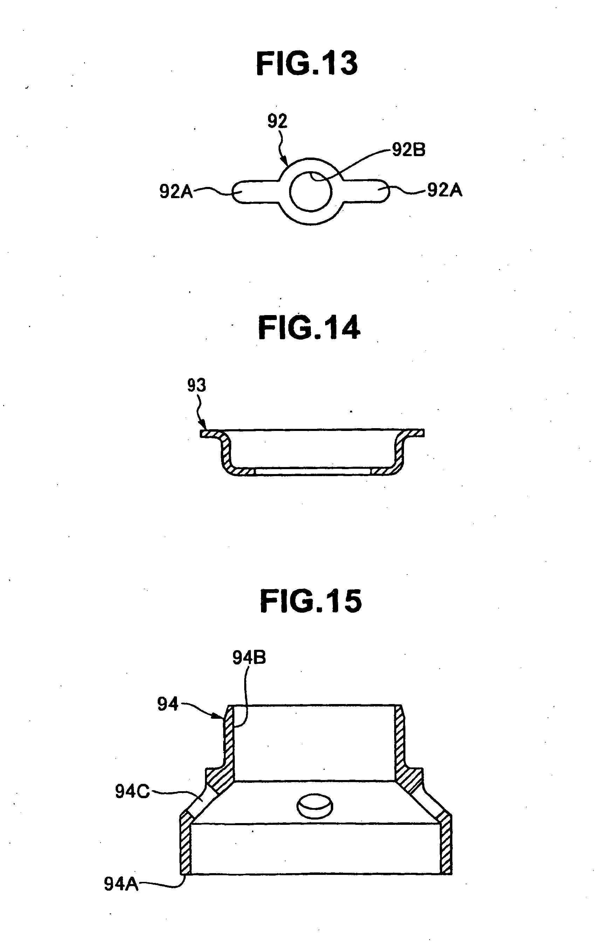

A long guide hole 23A extending in the axial direction is formed in both sides of a lower end of the piston rod 23 in the radial direction (FIG. 6), both side projections 92A of the pressing piece 92 shown in FIG. 13 are slidably inserted into the guide hole 23A almost without play. The lower end surface of the push rod 70 inserted into the hollow portion of the piston rod 23 directly collides against the upper surface of the pressing piece 92, and the noncircular cross sectional portion 85A of the needle valve 85 inserted into the lower end of the push rod 70 is loosely inserted into a circular hole 92B formed in the center of the pressing piece 92 such that the noncircular cross sectional portion 85A can move in the axial direction.

A spring receiver 93 (FIG. 14) which collides against both side projections 92A of the pressing piece 92 from below, and a valve retainer 94 (FIG. 14) which collides against an upper surface (back surface) of the compression-side disc valve 41A are disposed around a lower end (piston bolt 25) of the piston rod 23. A valve retainer spring 95 is interposed between the spring receiver 93 and the valve retainer 94. The spring receiver 93 is formed into a cup-like shape. An inner peripheral lower end of the cup collides against the both side projections 92A of the pressing piece 92, and the spring 95 sits on an upper end outer peripheral flange of the cup. The valve retainer 94 includes an annular press portion 94A which collides against an appropriate outer diameter position of an upper surface of the compression-side disc valve 41A over the enter periphery continuously (or intermittently), a slide portion 94B which is slid and guided by an upper end outer periphery of the piston bolt 25, and an oil passage 94C which brings the piston rod-side oil chamber 21A into communication with the compression-side flow path 41, the expansion-side flow path 42 and the bypass passage 45. The spring 95 sits on the outer peripheral step.

If the second adjusting portion 90 moves the push rod 70 in the axial direction as described above, the pressing piece 92 against which the lower end surface of the push rod 70 collides vertically moves the spring receiver 93, the valve retainer spring 95 expands and contracts, and a set load of the spring 95 is adjusted. The set load of the spring 95 biases the compression-side disc valve 41A in its closing direction through the valve retainer 94, and the compression-side damping force can be adjusted by the bending deformation of the compression-side disc valve 41A. The valve retainer 94 can be replaced by another cap having a different diameter of the press portion 94A. A valve retainer 94 having a large diameter press portion 94A presses an outer periphery of the compression-side disc valve 41A, and increases the damping force from a low speed region of the piston. A valve retainer 94 having a small diameter press portion 94A presses an inner periphery of the compression-side disc valve 41A, and increases the damping force in the intermediate to high speed regions of the piston.

When the second adjusting portion 90 moves the pressing piece 92 through the push rod 70, the push rod 70 and the pressing piece 92 idle in the axial direction with respect to the needle valve 85.This does not affect the needle valve 85.

According to the embodiment, the following effects can be obtained.
(a) The first adjusting portion 80 and the second adjusting portion 90 are coaxially disposed on the extension of the push rod 70 at the upper portion of the front fork 10, the first adjusting portion 80 and the push rod 70 can easily be coupled to each other in the rotational direction, the second adjusting portion 90 and the push rod 70 can easily be coupled to each other in the axial direction, simple, the number of the parts is small, and operation failure is not easily caused in the front fork 10.
(b) Since the first adjusting portion 80 and the second adjusting portion 90 are coaxially disposed on the upper portion of the front fork 10, this structure can be applied to a front fork 10 which can be adjusted only from the upper end surface of the outer tube 11. Since the first adjusting portion 80 and the second adjusting portion 90 does not have directional properties in the circumferential direction of the outer tube 11, the assembling position of to the vehicle body-side mounting members 14A and 14B in the circumferential direction is an arbitrary position and the assembling performance is excellent.
(c) There is only one hollow push rod 70 having the noncircular cross section, and the needle valve 85 is slidably inserted into the noncircular cross section of the push rod 70. Since the needle valve 85 is accommodated in the inner diameter of the push rod 70, no disposition space for the needle valve 85 is required around the outer periphery of the push rod 70, and this structure can excellently be applied to a front fork 10 having a thin piston rod 23.
(d) The first adjusting portion 80 is rotatably provided on the cap 13 of the upper portion of the front fork 10. The engaging piece 83 is engaged with the groove 80B formed in the end surface of the first adjusting portion 80 in the rotational direction. The outer periphery of the noncircular cross section of the push rod 70 can be engaged in the rotational direction with the noncircular hole 83B formed in the engaging piece 83, and can slide in the axial direction. The second adjusting portion 90 is threadedly engaged with the center hole of the first adjusting portion 80. The end surface of the second adjusting portion 90 can collide in the axial direction against the end surface of the push rod 70 which penetrates the noncircular hole 83B of the engaging piece 83. Therefore, the first adjusting portion 80 and the second adjusting portion 90 are coaxially disposed on the upper portion of the front fork 10 in a compact manner, rotation force of the first adjusting portion 80 can easily be transmitted to the push rod 70, and a force of the second adjusting portion 90 in the axial direction can be transmitted to the push rod 70.

## Claims

1. A damping force adjusting apparatus (49A) of a front fork (10) in which
an inner tube (12) on an axle side is slidably inserted into an outer tube (11) on a vehicle body side,
the inner tube (12) is provided at its inner periphery with a division wall member (19), a working oil chamber (21) is defined in a lower portion of the division wall member (19), and an oil reservoir chamber (22) is defined in an upper portion of the division wall member (19),
a hollow piston rod (23) mounted on the outer tube side is inserted into the working oil chamber (21) through the division wall member (19), the piston rod (23) is provided at its tip end with a piston (26) which slides in the working oil chamber (21),
the working oil chamber (21) of the inner tube (12) is divided by the piston (26) into a piston rod-side oil chamber (21A) and a piston-side oil chamber (218), the two oil chambers can be in communication with a compression-side flow path (41) and an expansion-side flow path (42) formed in the piston (26), outlets of the two flow paths (41, 42) are respectively provided with a compression-side damping valve (41A) and an expansion-side damping valve (42A),
a hollow portion of the piston rod (23) is provided with a bypass passage (45) which brings the piston rod-side oil chamber (21A) and the piston-side oil chamber (21 B) into communication with each other, and the bypass passage (45) is provided with the needle valve (85),
the hollow portion of the piston rod (23) is provided with a push rod (70), which can move in the rotational direction and the axial direction,
**characterized in that**
the push rod (70) has a noncircular cross section,
a first adjusting portion (80) which moves the push rod in the rotational direction and a second adjusting portion (90) which moves the push rod (70) in the axial direction are coaxially disposed on an extension of the push rod (70) at an upper portion of the front fork (10),
the needle valve (85) which is slidably inserted into the noncircular cross section of the push rod (70) is threadedly engaged with the hollow portion of the piston rod (23),
a spring (95) which collides against the push rod (70) in the axial direction biases the compression-side damping valve (41A) in its closing direction.

2. The damping force adjusting apparatus of the front fork according to claim 1, wherein the first adjusting portion (80) is rotatably provided on a cap (13) at an upper portion of the front fork, an engaging piece (83) is engaged in the rotation direction with a groove (80B) formed in an end surface of the first adjusting portion (80), an outer periphery of the push rod (70) having a noncircular cross section is engaged in the rotation direction with a noncircular hole (83B) formed in the engaging piece (83), and the outer periphery of the push rod (70) slides on the noncircular hole (83B) in the axial direction,
the second adjusting portion (90) is threadedly engaged with a center hole of the first adjusting portion (80), an upper end surface of the second adjusting portion collides against an upper end surface of he push rod (70) which penetrates the noncircular hole (83B) of the engaging piece (83) in the axial direction.

3. The damping force adjusting apparatus of the front fork according to claim 2, wherein mounting collar (24) is threadedly engaged with a lower end opening of the cap (13), and an upper end of the piston rod (70) is threadedly engaged with the mounting collar (24).

4. The damping force adjusting apparatus of the front fork according to claim 3. wherein the first adjusting portion (80) is liquid-tightly inserted from a lower end opening of the center hole of the cap (13), the first adjusting portion (80) is engaged in the axial direction with an intermediate step provided on a center hole of the cap (13), a flat washer (82) is placed on an upper end surface of the mounting collar (24) threadedly engaged the cap (13) on the side of the tower end opening, and the first adjusting portion (80) collides against the flat washer (82) in the axial direction, the second adjusting portion (90) is liquid-tightly inserted from the lower end opening of a center hole of the first adjusting portion (80), the second adjusting portion (90) engages in the axial direction with an intermediate step formed on the center hole of the first adjusting portion, (80) a lower end surface of the second adjusting portion (90) collides against the upper end surface of the push rod (70) without gap in the axial direction.

5. The damping force adjusting apparatus of the front fork according to any one of claims 1 to 4, wherein a long guide hole (23A) extending in an axial direction is formed in both sides of a lower end of the piston rod (23) in the radial direction, and both side projections (92A) of the pressing piece (92) are slideably inserted into the guide hole (23A) almost without gap,
the lower end surface of the push rod (70) inserted into the hollow portion of the piston rod (23) directly collides against an upper surface of the pressing piece (92), and the noncircular cross section (85A) of the needle valve (85) inserted into a lower end of the push rod (70) is loosely inserted into a circular hole (92B) formed in the center of the pressing piece (92) such that the noncircular cross section (85A) can move in the axial direction.

6. The damping force adjusting apparatus of the front fork according to claim 5 wherein a spring receiver (93) which collides against the both end projections (92A) of the pressing piece (92) from below, and a valve retainer (94) which collides against an upper surface of the compression-side disc valve (41A) are disposes around the lower end (25) of the piston rod (23), and the spring (95) is interposed between the spring receiver (93) and the valve retainer (94).

## Patentansprüche

1. Dämpfkraft-Reguliervorrichtung (49A) einer Vorderradgabel (10), bei der
eine innere Röhre (12) an einer Achsenseite verschiebbar in eine äußere Röhre (11) an einer Fahrzeugkarosserieseite eingeführt ist,
die innere Röhre (12) an ihrem Innenumfang mit einem Trennwandelement (19) versehen ist, eine Arbeitsölkammer (21) in einem unteren Abschnitt des Trennwandelementes (19) ausgebildet ist und eine Ölvorratskammer (22) in einem oberen Abschnitt des Trennwandelementes (19) ausgebildet ist,
eine hohle Kolbenstange (23), die an der Seite der äußeren Röhre angebracht ist, durch das Trennwandelement (19) hindurch in die Arbeitsölkammer (21) eingeführt ist und die Kolbenstange (23) an ihrem vorderen Ende mit einem Kolben (26) versehen ist, der in der Arbeitsölkammer (21) gleitet,
die Arbeitsölkammer (21) der inneren Röhre (12) durch den Kolben (26) in eine Kolbenstangenseiten-Ölkammer (21A) und eine Kolbenseiten-Ölkammer (21 B) geteilt ist, die beiden Ölkammern mit einem Kompressionsseiten-Strömungsweg (41) und einem Expansionsseiten-Strömungsweg (42) in Verbindung stehen können, die in dem Kolben (26) ausgebildet sind, und Auslasse der zwei Strömungsweg (41, 42) mit einem Kompressionsseiten-Dämpfventil (41A) bzw. einem Expansionsseiten-Dämpfventil (42A) versehen sind,
ein hohler Abschnitt der Kolbenstange (23) mit einem Umgehungskanal (45) versehen ist, der die Kolbenstangenseiten-Ölkammer (21A) und die Kolbenseiten-Ölkammer (21 B) in Verbindung miteinander bringt, und der Umgehungskanal (45) mit einem Nadelventil (85) versehen ist,
der hohle Abschnitt der Kolbenstange (23) mit einer Schubstange (70) versehen ist, die sich in der Drehrichtung und der Axialrichtung bewegen kann,
**dadurch gekennzeichnet, dass**
die Schubstange (70) einen nicht kreisförmigen Querschnitt hat,
ein erster Regulierabschnitt (80), der die Kolbenstange in der Drehrichtung bewegt, und ein zweiter Regulierabschnitt (90), der die Schubstange (70) in der axialen Richtung bewegt, koaxial an einer Verlängerung der Schubstange (70) an einem oberen Abschnitt der Vorderradgabel (10) angeordnet sind,
das Nadelventil (85), das verschiebbar in den nicht kreisförmigen Querschnitt der Schubstange (70) eingeführt ist, in Gewindeeingriff mit dem hohlen Abschnitt der Schubstange (23) ist,
eine Feder (95), die in der axialen Richtung auf die Schubstange (70) auftrifft, das Kompressionsseiten-Dämpfventil (41A) in seiner Schließrichtung spannt.

2. Dämpfkraft-Reguliervorrichtung der Vorderradgabel nach Anspruch 1, wobei der erste Regullerabschnitt (80) drehbar an einer Kappe (13) an einem oberen Abschnitt der Vorderradgabel vorhanden ist, ein Eingriffsteil (83) in der Drehrichtung mit einer Nut (80B) in Eingriff ist, die in einer Endfläche des ersten Regulierabschnitts (80) ausgebildet ist, ein Außenumfang der Schubstange (70) mit einem nicht kreisförmigen Querschnitt in der Drehrichtung mit einem nicht kreisförmigen Loch (83B) in Eingriff ist, das in dem Eingriffsteil (83) ausgebildet ist, und der Außenumfang der Schubstange (70) in dem nicht kreisförmigen Loch (83B) in der axialen Richtung gleitet,
der zweite Regulierabschnitt (90) in Gewindeeingriff mit einem Mittelloch des ersten Regulierabschnitts (80) ist und eine obere Endfläche des zweiten Regulierabschnitts an einer oberen Endfläche der Schubstange (70) anschlägt, die das nicht kreisförmige Loch (83B) des Eingriffsteils (83) in der axialen Richtung durchdringt.

3. Dämpfkraft-Reguliervorrichtung der Vorderradgabel nach Anspruch 2, wobei ein Anbringungsbund (24) in Gewindeeingriff mit einer Öffnung des unteren Endes der Kappe (13) ist und ein oberes Ende der Kolbenstange (70) in Gewindeeingriff mit dem Anbringungsbund (24) ist.

4. Dämpfkraft-Reguliervorrichtung der Vorderradgabel nach Anspruch 3, wobei der erste Regulierabschnitt (80) über einer Öffnung des unteren Endes des Mittellochs der Kappe (13) flüssigkeitsdicht eingeführt ist, der erste Regulierabschnitt (80) in der axialen Richtung mit einem Zwischenabsatz in Eingriff ist, der an einem Mittelloch der Kappe (13) vorhanden ist, eine flache Scheibe (82) an einer oberen Endfläche des Anbringungsbundes (24) angeordnet ist, der mit der Kappe (13) an der Seite der Öffnung des unteren Endes in Gewindeeingriff ist, und der erste Regulierabschnitt (80) in der axialen Richtung an der flachen Scheibe anschlägt, der zweite Regulierabschnitt (90) über die Öffnung des unteren Endes eines Mittellochs des ersten Regulierabschnitts (80) flüssigkeitsdicht eingeführt ist, der zweite Regulierabschnitt (90) in der axialen Richtung mit einem Zwischenabsatz in Eingriff ist, der an dem Mittelloch des ersten Regulierabschnitts (80) ausgebildet ist, und eine untere Endfläche des zweiten Regulierabschnitts (90) an der oberen Endfläche der Schubstange (70) ohne Zwischenraum in der axialen Richtung anschlägt.

5. Dämpfkraft-Regullervorrichtung der Vorderradgabel nach einem der Ansprüche 1 bis 4, wobei ein langes Führungsloch (23A), das sich in einer axialen Richtung erstreckt, in beiden Seiten eines unteren Endes der Kolbenstange (23) in der radialen Richtung ausgebildet ist, und beide seitlichen Vorsprünge (92A) des Pressteils (92) nahezu ohne Zwischenraum verschiebbar in das Führungsloch (23A) eingeführt sind,
die untere Endfläche der Schubstange (70), die in den hohlen Abschnitt der Kolbenstange (23) eingeführt ist, direkt an einer oberen Fläche des Pressteils (92) anschlägt, und der nicht kreisförmige Querschnitt (85A) des Nadelventils (85), das in ein unteres Ende der Schubstange (70) eingeführt ist, in ein kreisförmiges Loch (92B), das in der Mitte des Pressteils (92) ausgebildet ist, lose so eingeführt ist, dass sich der nicht kreisförmige Querschnitt (85a) in der axialen Richtung bewegen kann.

6. Dämpfkraft-Reguliervorrichtung der Vorderradgabel nach Anspruch 5, wobei eine Federaufnahmeeinrichtung (93), die an den beiden Endvorsprüngen (92A) des Pressteils (92) von unten anschlägt, und eine Ventilhalteeinrichtung (94), die an einer oberen Fläche des Kompressionsseiten-Scheibenventils (41A) anschlägt, um das untere Ende (25) der Kolbenstange (23) herum angeordnet sind und die Feder (95) zwischen der Federaufnahmeeinrichtung (93) und der Ventil-Halteeinrichtung (94) angeordnet ist.

## Revendications

1. Dispositif d'ajustement de la force d'amortissement (49A) d'une fourche avant (10), dans lequel :
un tube intérieur (12), sur un côté axe, est inséré à coulissement dans un tube extérieur (11) sur un côté carrosserie de véhicule,
le tube intérieur (12) est pourvu, sur sa périphérie intérieure, d'un organe formant paroi de division (19), une chambre à huile de travail (21) est définie dans une partie inférieure de l'organe formant paroi de division (19), et une chambre formant réservoir d'huile (22) est définie dans une partie supérieure de l'organe formant paroi de division (19),
une tige de piston (23) creuse, montée sur le côté tube extérieur, est insérée dans la chambre à huile de travail (21), à travers l'organe formant paroi de division (19), la tige de piston (23) est munie, à son extrémité de bout, d'un piston (26) coulissant dans la chambre à huile de travail (21),
la chambre à huile de travail (21) du tube intérieur est divisée par le piston (26), en formant une chambre à huile de côté tige de piston (21A) et une chambre à huile de côté piston (21B), les deux chambres à huile peuvent être en communication avec un chemin d'écoulement de côté compression (41) et un chemin d'écoulement de côté expansion (42) formé dans le piston (26), des sorties des deux chemins (41, 42) sont respectivement munies d'une soupape d'amortissement de côté compression (41A) et d'une soupape d'amortissement de côté expansion (42A),
une partie creuse de la tige de piston (23) est pourvue d'un passage de dérivation (45), qui met la chambre à huile de côté tige de piston (21A) et la chambre à huile de côté piston (21B) en communication l'une avec l'autre, et le passage de dérivation (45) est muni de la soupape à pointeau (85),
la partie creuse de la tige de piston (23) est pourvue d'une tige de poussée (70), pouvant se déplacer dans le sens d'une rotation et en direction axiale,
**caractérisé en ce que**
la tige de poussée (70) présente une section transversale non circulaire,
une première partie d'ajustement (80), qui déplace la tige de poussée dans le sens de rotation, et une deuxième partie d'ajustement (90), qui déplace la tige de poussée (70) en direction axiale, sont disposées coaxialement sur une extension de la tige de poussée (70), en une partie supérieure de la fourche avant (10),
la soupape à pointeau (85), qui est insérée à coulissement dans la section transversale non circulaire de la tige de poussée (70), est mise en prise par filetage avec la partie creuse de la tige de piston (23),
un ressort (95), venant en butée contre la tige de piston (70) en direction axiale, sollicite la soupape d'amortissement de côté compression (41A) dans son sens de fermeture.

2. Dispositif d'ajustement de la force d'amortissement de la fourche avant selon la revendication 1, dans lequel la première partie d'ajustement (80) est montée, de manière à pouvoir tourner, sur un couvercle (13), en une partie supérieure de la fourche avant, une pièce de mise en prise (83) est mise en prise dans le sens de rotation avec une gorge (80B) formée dans une surface d'extrémité de la première partie d'ajustement (80), une périphérie extérieure de la tige de poussée (70), ayant une section transversale non circulaire, est mise en prise dans le sens de rotation avec un trou (83B) non circulaire formé dans la pièce de mise en prise (83), et la périphérie extérieure de la tige de poussée (70) coulisse sur le trou (83B) non circulaire, en direction axiale,
la deuxième partie d'ajustement (90) est mise en prise par filetage avec un trou central de la première partie d'ajustement (80), une surface d'extrémité supérieure de la deuxième partie d'ajustement vient en butée contre une surface d'extrémité supérieure de la tige de poussée (70), qui pénètre dans le trou (83B) non circulaire de la pièce de mise en prise (83) en direction axiale.

3. Dispositif d'ajustement de la force d'amortissement de la fourche avant selon la revendication 2, dans lequel une collerette de montage (24) est mise en prise par filetage avec une ouverture d'extrémité inférieure du couvercle (13), et une extrémité supérieure de la tige de piston (70) est mise en prise par filetage avec la collerette de montage (24).

4. Dispositif d'ajustement de la force d'amortissement de la fourche avant selon la revendication 3, dans lequel la première partie d'ajustement (80) est insérée, de façon étanche aux liquides, à partir d'une ouverture d'extrémité inférieure du trou central du couvercle (13), la première partie d'ajustement (80) est mise en prise en direction axiale avec un gradin intermédiaire prévu sur un trou central du couvercle (13), une rondelle (82) plate est placée sur une surface d'extrémité supérieure de la collerette de montage (24) mise en prise par filetage avec le couvercle (13) sur le côté de l'ouverture d'extrémité inférieure, et la première partie d'ajustement (80) vient en butée contre la rondelle (82) plate en direction axiale, la deuxième partie d'ajustement (90) est insérée, de façon étanche aux liquides, à partir de l'ouverture d'extrémité inférieure d'un trou central de la première partie d'ajustement (80), la deuxième partie d'ajustement (90) vient en prise en direction axiale avec un gradin intermédiaire formé sur le trou central de la première partie d'ajustement (80), une surface d'extrémité inférieure de la deuxième partie d'ajustement (90) vient en butée contre la surface d'extrémité supérieure de la tige de poussée (70), sans intervalle en direction axiale.

5. Dispositif d'ajustement de la force d'amortissement de la fourche avant selon l'une quelconque des revendications 1 à 4, dans lequel un trou de guidage (23A) long, s'étendant en direction axiale, est formé dans les deux côtés d'une extrémité inférieure de la tige de piston (23), en direction radiale, et les deux saillies latérales (92A) de la pièce de pressage (92) sont insérées à coulissement dans le trou de guidage (23A), pratiquement sans aucun intervalle,
la surface d'extrémité inférieure de la tige de poussée (70) insérée dans la partie creuse de la tige de piston (23) vient directement en butée contre une surface supérieure de la pièce de pressage (92), et la section transversale (85A) non circulaire de la soupape à pointeau (85) insérée dans une extrémité inférieure de la tige de poussée (70) est insérée de façon lâche dans un trou (22B) circulaire formé au centre de la pièce de pressage (92), de manière que la section transversale (85A) non circulaire puisse se déplacer en direction axiale.

6. Dispositif d'ajustement de la force d'amortissement de la fourche avant selon la revendication 5, dans lequel un récepteur de ressort (93), qui vient en butée par le dessous contre les deux saillies d'extrémité (92A) de la pièce de pressage (92), et un organe de retenue de soupape (94), qui vient buter contre une surface supérieure de la soupape à disque (41A) de côté compression, sont disposés autour de l'extrémité inférieure (25) de la tige de piston (23), et le ressort (95) est interposé entre le récepteur de ressort (93) et l'organe de retenue de soupape (94).
